# EUROPEAN PATENT APPLICATION

(11) **EP 1 700 801 A1**
(43) Date of publication of application: **13.09.2006**
(21) Application number: 05425128.5
(22) Date of filing: 08.03.2005
(51) Int. Cl.: B65G 53/56, F16K 11/083

(54) **A diverter valve for pneumatic transport lines**

(71) Applicant: WAM S.p.A., 41030 Ponte Motta Cavezzo (Modena) (IT)
(72) Inventor: Marchesini, Vainer, 41030 S.Prospero (Modena) (IT)
(74) Representative: Gotra, Stefano

(57) **Abstract**

The valve comprises a first conduit (1), a second conduit (2) and a third conduit (3), having axes that meet at a point (A), which sleeves can on command be inter-connected in predetermined ways by an obturator (4) which is activated via a command rod; thus a connection can be established between the third conduit (3) and, alternatively, the first conduit (1) or the second conduit (2). All the parts of the valve which come into contact with the fluid crossing the valve are made of a bio-compatible plastic material.

## Description

The invention particularly relates to three-way valves which enable, even while a plant is functioning, a deviation of fluid coming from an inlet conduit to one or another of outlet conduits. The valve also functions as a selector in cases where the fluid coming from one or another of the outlet conduits (functioning as inlet conduits in this case) is to be sent into the inlet conduit (functioning as an outlet conduit in this instance).

These valves are provided with a first and second conduit with inclined axes which meet at a point. An axis of a third conduit also meets with the other at this point, which third conduit is always free at the point where the conduits meet, whereas the first and second conduits are alternatively connected or blocked in the direction of the meeting of the axes. The axis meeting zone is occupied by an obturator which on command enables a connection to be created between the first and the third conduits, excluding a connection between the second and third conduits, or vice versa. This is not true only during a transitory stage of valve passage from one position into another, in which the first and second conduits are in partial connection in order for sharp hammer effects in the valve to be avoided.

The valve obturator is generally made in such a way that its passage hole reconstructs continuity of the first and second conduit in connection with the third conduit.

These types of valves are used especially in pneumatic transport plants where powders and small granules of various types of products, such as for example food, pharmaceutical, chemical and the like products, are carried in a primary fluid (generally air).

Valves of this type have been present in the art from time immemorial (see, for example, patent DE-C-277519 from 1913).

Generally the prior art valves exhibit seal problems, as the movement of the obturator can, over time, cause a deterioration of the seal organs which causes a considerable loss of efficiency in the pneumatic transport system. Known valves also exhibit problems related to abrasion of their parts, caused by the particles moving internally of the valve, which abrasion not only leads to valve deterioration but can also cause loss of tiny and undesired particles of the material the valve is made of into the material being transported. This is a particularly worrying aspect when the products being transported are food or pharmaceutical products.

The main aim of the present invention is to obviate the above-described drawbacks by providing a valve of the above-described type which does not create problems upon the release of small particles of material which detach from the valve following abrasion caused by the fluid flowing through the valve, and which also guarantees a good seal.

An advantage of the invention is to provide a valve which can be adapted to the plant it is destined for even in the presence of small size differences of the parts of the plant to which the valve is to be connected.

A further advantage of the invention is to provide a valve which is easy to construct and assemble and which facilitates maintenance and, if necessary, replacement operations for parts of the valve.

These aims and advantages and more besides are all attained by the present invention as it is characterised by the claims that follow.

Further characteristics and advantages of the present invention will better emerge from the detailed description which follows of an embodiment of the invention, illustrated by way of non-limiting example in the figures of the drawings, in which:

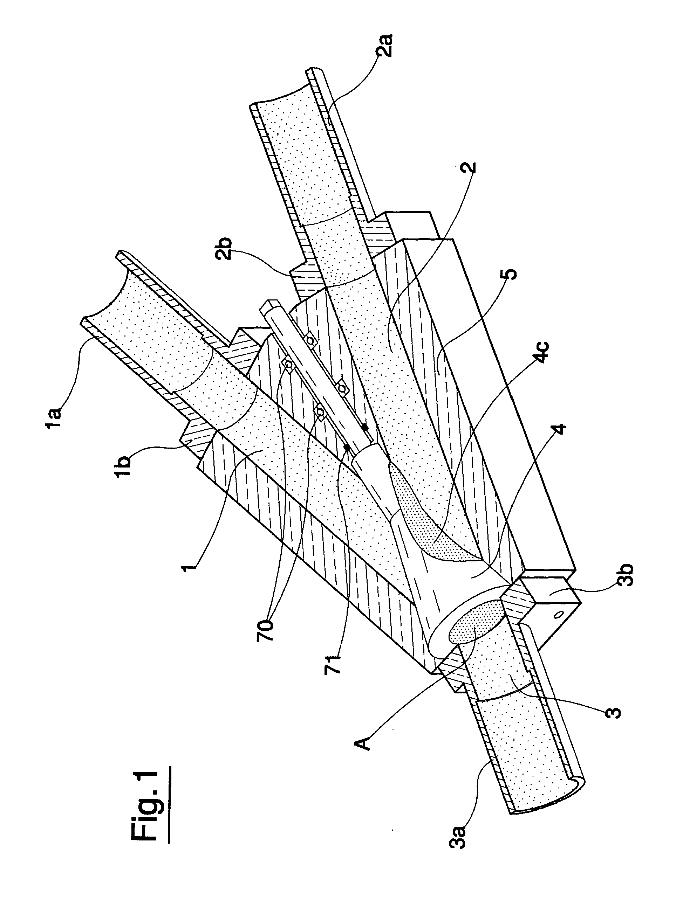

Figure 1 is a sectioned perspective view of the valve of the invention;

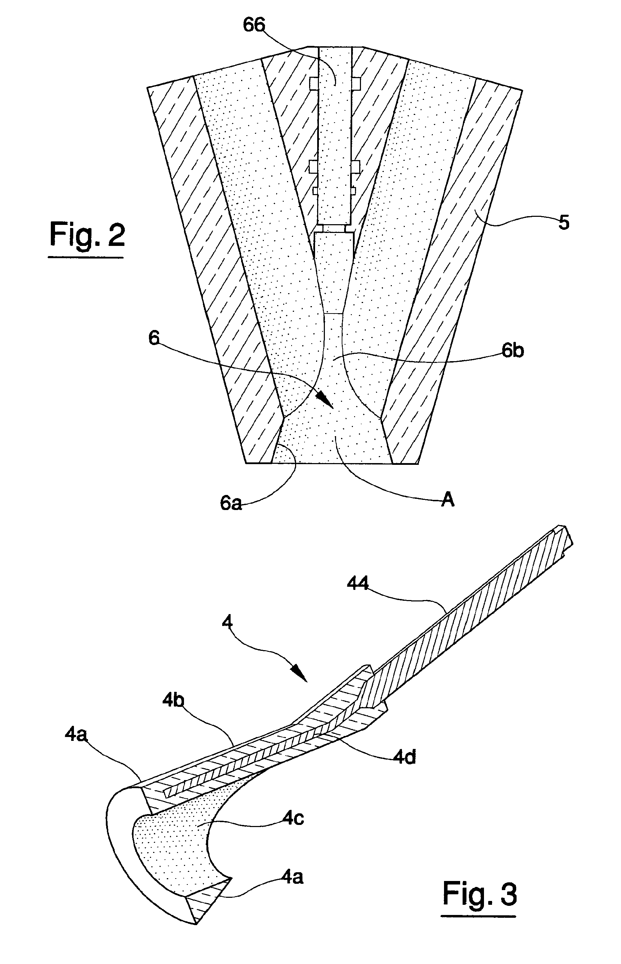

Figure 2 is a section of vertical elevation of the central body of the valve of the invention;
Figure 3 is a perspective view, with some parts sectioned, of the obturator of the valve of the invention.

The diverter valve of the invention, illustrated in the figures of the drawings and described herein below, is used in pneumatic transport plants in which a primary fluid, generally air, transports loose materials such as powders or granules; its function is to convey into a single transport channel material alternatively coming from two other transport channels (or, on the contrary, convey the fluid coming from one transport channel into two different transport channels). The valve is particularly, though not exclusively, applicable in transport plants used in the food, pharmaceutical, chemical and the like industries.

The diverter valve of the invention comprises a first 1, a second 2 and a third conduit 3, which have axes that meet at a point A; the first and second conduits are inclined with respect to each other, and arranged on another side to the third conduit. Preferably, though not necessarily, the third conduit is coaxial to one of the other conduits (in the figure with the second conduit 2). The transport channels (not illustrated) which convey the fluid in entry and exit of the valve are connected up to these conduits.

The valve further comprises a truncoconical obturator 4, solidly constrained to a command rod 44; acting on the rod 44 leads to a movement of the obturator 4. The obturator 4 affords a through-hole 4c, through which the fluid passes into the valve 4; the obturator 4 also comprises a truncoconical first seal surface 4a, which prevents the fluid passage between the first, the second and the third conduits from occurring in zones of the valve other than the through-hole 4c; the obturator 4 also comprises a second seal surface 4b, also truncoconical, which on command alternatively isolates the first conduit 1 or the second conduit 2 from the third conduit 3.

The conformation of the obturator 4 enables, upon a command on the rod 44 using means which are not illustrated in the figure, but which are of known type, a connection to be obtained between the third conduit 3 and, alternatively, the first conduit 1 or the second conduit 2; for this purpose the through hole 4c is, as in prior-art valves, conformed in such a way as to restore continuity of the first or second conduits according to which connection is required with the third conduit, either the first or the second conduits. The movement of the obturator, in passing from one working condition to another, consists of a 180° turn, and is obtained by applying a twisting motion on the command rod 44.

The valve comprises a central body 5 in which part of the first, second and third conduits are afforded; there is also a truncoconical housing 6 in the central body for receiving the obturator 4. Finally a housing 66 is provided for a part of the command rod 44 which does not project from the central body; the end of the rod 44 which is not connected to the obturator 4 projects from the central body 5 in order to be available to the means for moving the obturator 4.

The command rod 44 is maintained in axial position and guided inside the housing 66 by two bearings, namely two brass bushings, which are housed in cavities afforded in the housing 66. There is also a seal ring 71 for preventing loss of fluid through the housing 66.

The valve further comprises a first sleeve 1a, a second sleeve 2a and a third sleeve 3a, which have an internal diameter which is equal to the internal diameters of, respectively, the first, second and third conduits; each sleeve is provided with a connection plate, respectively 1b, 2b and 3b, with which it can be connected to the central body, for example by screws; each sleeve is connected to a respective conduit in such a way that the internal hole thereof is coaxial with the conduit to which it is connected.

In particular, in order to provide interchangeability of the parts making up the valve, the first and the second sleeve are of identical size and shape. Also, the internal diameters of the first conduit, the second conduit, the third conduit, the through hole 4c of the obturator 4, as well as those of the first, second and third sleeve, are equal.

The housing 6 comprises a truncoconical first seal seating 6a, arranged in the housing zone facing the third conduit, which is coupled with the first sealing surface 4a of the obturator, for guaranteeing against undesired passages of fluid and therefore the seal of the valve between the first and second conduits and the third conduit; the valve must permit fluid passage between the first and second conduits and the third conduit only through the through hole 4c.

The housing 6 further comprises a second seal seating 6b which couples with the second seal surface 4b of the obturator 4. Both the seal seating 6b and the second sealing surface 4b are truncoconical; the lateral truncoconical surfaces of the seal seating 6b and the second sealing surface 4b exhibit openings, respectively at the intersection of the seal seating 6b with the first and the second conduit, and the second sealing surface 4b with the through hole 4a.

Preferably, the connection zone between the obturator 4 and the command rod 44 is cylindrical and couples with a corresponding cylindrical seal seating afforded in the housing 6 for preventing the exit of fluid through the housing 66 of the rod 44.

All the parts of the valve which come into contact with the fluid crossing the valve, i.e. the internal walls of the first, second and third conduit, the internal wall of the through hole 4c and the sealing surface 4b of the obturator, are made using a bio-compatible plastic material, and in particular, though not exclusively, in polyurethane; it might however be advisable to realise the central body 5 in a more rigid material than polyurethane, though possibly still bio-compatible.

All of the seal seatings of the valve, as well as all of the sealing surfaces of the obturator which are not in contact with the fluid flow, i.e. the seal surface 4a of the obturator and the seal seatings 6a and 6b of the housing 6 are made using bio-compatible plastic material in particular, though not exclusively, a polyurethane.

All of the above can be obtained using coatings or inserts of a desired plastic material, but also, as illustrated in the figures, by using plastic to realise all the pieces the valve is made of.

Exceptions to this are the command rod 44, and a prolongation 4d of the rod 44 which is inserted internally of the obturator 4 and is shaped similarly to the obturator in order to be contained within the body of the wall delimiting the though hole 4c of the obturator; these are made of metal, in particular stainless steel. The presence of the prolongation 4d of the bar enables the required torque to be exerted on the obturator, often of considerable entity, without running the risk of breaking the command rod 44 or the obturator 4 itself.

The valve can be used safely in plants transporting food or pharmaceutical products because even where there are miniscule particles of the material of the valve which might detach following abrasion of the fluid which runs through the valve itself, these particles, thanks to being made of a bio-compatible material, and therefore non-toxic, would not create any problems.

Further, the conformation of the various parts making up the valve, in particular the shapes of the seatings and the seal surfaces, as well as the plastic nature of the material, guarantee at all times a good valve seal, even in cases where some of the parts might be slightly worn. The truncoconical shape of the seatings and the seal surfaces also enables a simple taking-up of any play which might emerge and compromise the valve seal.

The valve can also be very easily adapted to the plant it is destined to be fitted into, even where there are small size differences in the parts of the plant; the material the valve is made of enables the small differences to be taken up without great problems.

The conformation of the valve further grants considerable ease of assembly, maintenance, and replacement of parts of the valve. The assembly of the valve is simple and is done by sliding the obturator into its housing, which is made possible by the absence of undercut zones, and by connecting the sleeves to the central body of the valve. The pneumatic transport plant piping is then connected up to the sleeves.

Replacing the central body of the valve and/or the obturator, which are the parts most susceptible to wear, is extremely simple; also, cleaning these parts is very simple. It is sufficient to detach the sleeves from the central body (even without detaching them from the plane), and proceed to cleaning or replacing the central body of the obturator.

It is also advantageous that some of the sleeves are the same. This considerably reduces both construction costs and warehousing, and supply of replacement parts.

## Claims

1. A diverter valve for pneumatic transport plants, comprising: a first conduit (1) and a second conduit (2) having inclined axes which merge at a point (A); a third conduit (3) having an axis leading to the point (A); an obturator (4) provided with a through-hole (4c) conformed in such a way as to enable, on command, a connection between the third conduit (3) and, alternatively, the first conduit (1) or the second conduit (2); the obturator being further provided with a first sealing surface (4a) which prevents a passage of fluid between the first conduit (1), the second conduit (2) and the third conduit (3) from occurring in zones of the valve other than the through hole (4c); the obturator being further provided with a second sealing surface (4b) which on command alternatively isolates the first conduit (1) or the second conduit (2) from the third conduit (3); a command rod (44) being solidly constrained to the obturator (4) and enabling movement of the obturator (4); **characterised in that** all parts of the valve which come into contact with a fluid crossing the valve are made of a bio-compatible plastic material.

2. The valve of claim 1, **characterised in that** the bio-compatible plastic material is a polyurethane.

3. The valve of claim 1, **characterised in that** it comprises a central body (5) affording at least a part of the first conduit (1), the second conduit (2) and the third conduit (3); **in that** it also comprises a truncoconical housing for receiving the truncoconical obturator (4), and a housing (66) for receiving at least a part of the command rod (44); the truncoconical housing (6) comprising a first seal seating (6a) which couples with a first sealing surface (4a) of the obturator, and a second seal seating (6b) which couples with the second sealing surface (4b) of the obturator (4).

4. The valve of claim 3, **characterised in that** the first seal seating (6a) and the second seal seating (6b) and the first sealing surface (4a) and the second sealing surface (4b) are made of a bio-compatible plastic material.

5. The valve of claim 4, **characterised in that** the command rod (44) comprises a metal bar, an end of which projects externally of the obturator (4) and another end of which (4d) is arranged internally of the obturator (4).

6. The valve of claim 3, **characterised in that**: the central body (5) is made of a bio-compatible plastic material; it comprises a first sleeve (1a), a second sleeve (2a) and a third sleeve (3a) which are made of a bio-compatible plastic material; the first sleeve (1a), the second sleeve (2a) and the third sleeve (3a) having same internal diameters as internal diameters of the first conduit (1), the second conduit (2) and the third conduit (3) afforded in the central body (5); and the first sleeve (1a), the second sleeve (2a) and the third sleeve (3a) being connected to the central body (5) respectively at the first conduit (1), the second conduit (2) and the third conduit (3).

7. The valve of claim 6, **characterised in that** the first conduit (1), the second conduit (2) and the third conduit (3), the through hole (4c), the first sleeve (1a), the second sleeve (2a) and the third sleeve (3a) all have a same internal diameter.

8. The valve of claim 6, **characterised in that** the first sleeve (1a) and the second sleeve (2a) are of identical shape and size.
